# EUROPEAN PATENT SPECIFICATION

(11) **EP 2 961 499 B1**
(45) Date of publication and mention of the grant of the patent: **10.10.2018**
(21) Application number: 13876655.5
(22) Date of filing: 26.02.2013
(51) Int. Cl.: A63C 17/01, A63C 17/22, A63C 17/26

(54) **SKATEBOARD TRUCK AND CASTER WITH SUSPENSION MECHANISM**
SKATEBOARDACHSE UND -ROLLE MIT FEDERUNGSMECHANISMUS
BLOC-ESSIEU ET ROULETTE DE PLANCHE À ROULETTES À MÉCANISME DE SUSPENSION

(43) Date of publication of application: 06.01.2016
(73) Proprietor: Lininger, Robert Jr., Fallbrook, CA 92088 (US)
(72) Inventor: Lininger, Robert Jr., Fallbrook, CA 92088 (US)
(74) Representative: Schaumburg und Partner Patentanwälte mbB
(86) International application number: PCT/US2013/027799
(87) International publication number: WO 2014/133485

(56) References cited:
- WO-A1-97/28863
- FR-A1- 2 435 958
- US-A- 4 398 735
- US-A1- 2005 051 983
- US-A1- 2006 061 054
- US-A1- 2008 252 026
- US-A1- 2008 252 026
- US-A1- 2011 133 420
- US-B1- 6 318 739
- US-B1- 7 104 558

## Description

### CROSS-REFERENCE TO RELATED APPLICATIONS

Not Applicable.

### BACKGROUND OF THE INVENTION:

### FIELD OF THE INVENTION

The present invention relates generally to skateboards and skate devices such as quad wheel roller skates, multi-wheel scooters, and to casters and caster devices such as scooters, caster boards, wheelchairs and utility carts. More particularly, the invention concerns both dual wheel and single wheel axle support mechanisms and casters with novel suspension mechanisms designed to absorb shock. Also disclosed is an embodiment for an extendable tilt axis alignment device for a truck hanger enabling full tilt steering functions when a truck hanger is mounted on a biased suspension mechanism.

### DESCRIPTION OF RELATED ART

Skateboards of various designs having a pair of trucks in opposing orientation disposed under a rider surface are well known in the art. The prior art trucks are typically fitted with a pair of wheels with steering being accomplished by the rider tilting the rider surface, thus pivoting the hangers on a tilt axis between 30° and 55°, rotating axles and wheels in opposite directions thus causing the board to turn. Two types of kingpin configurations for skateboard trucks are predominate in prior art. The first is the conventional kingpin truck consisting of a hanger that tilts on a kingpin which acts as the fulcrum for the hanger. The kingpin is mounted approximately perpendicular to the tilt axis through a central aperture of the hanger with the kingpin being fixedly attached to a mounting base. The hanger has a central alignment leg projecting in a transverse direction from the axle that maintains the tilt axis and is received by a pivot cup that is an articulation point in the mounting base. The hanger tilts along the axis and resistively compresses resilient tilt-crush bushings that bring the hanger back to a neutral position. The second is the torsion kingpin truck that consists of a hanger that tilts on a kingpin that is located longitudinally on the tilt axis so that the hanger can tilt on the kingpin to permit steering the truck. Various torsion mechanisms have also been disclosed that provide resistance to tilting and function to assist in bringing the hanger back to a neutral position.

Prior art designs of non-biased casters often include a U-shaped wheel fork with a transversely mounted axle having a single wheel disposed on the axle and located between the arms of the wheel fork. Another form of prior art caster is the split wheel caster which has a central body portion with a transversely mounted axle passing through the central body and projecting on both sides to receive two wheels. Though the split wheel caster has two wheels, it effectively performs in the same manner as a single wheel caster.

Prior art designs of non-biased axle support mechanisms for the skateboard and caster provide adequate performance over smooth surfaces, but can become extremely hazardous when a wheel of the device encounters an obstacle such as a small rock or minor curb transition. Because the prior art devices have no effective means to absorb the shock of the impact with a rock or curb transition, the rider can either be ejected from the device or dangerously lose control of the device.

For over a century, many types of biased suspension mechanisms have been suggested to absorb shock and provide the user with a more compliant and safer passage over irregular terrain. However, none of these prior art devices have been able to provide the novel attributes of the present invention regarding shock absorption, stability, functionality and weight.

By way of example, a biased skateboard truck with a conventional kingpin configuration is disclosed in U.S. Patent No. 4,155,565 issued to de Caussin et al. The de Caussin device includes a truck that is mounted onto a separate biased plate-shaped member which comprises a duplication of the base structure and the biasing means and results in additional weight and undesirable added axle height thereby limiting functionality.

Another prior art truck construction with a conventional kingpin configuration and suspension mechanism is disclosed in U.S. Publication No. 2008/0252026A to Kang. In the Kang device, a biased plate-shaped member supports a hanger that is a non-extendable link between opposing inwardly facing independent arms. With this construction, when a force is applied to the truck, the arms bind and negate each other's movement and shock-absorbing potential.

U.S. Patent No. 4,152,001 issued to Christianson, discloses an axle hanger that is mounted on a plate-shaped member. The Christianson device has the ability to conform to the terrain, but lacks a steering alignment mechanism to enable the hanger to maintain the steering tilt axis. Accordingly, the hanger is susceptible to axial forces that could cause loss of the integrity of the steering geometry and stability.

U.S. Patent No. 7,219,907 to Chang concerns a torsion kingpin truck configuration that has a suspension mechanism but has limitations due to the independent movement of the axles as the bottom of the central body can scrape the ground if the suspension is compressed, thus requiring large wheels to avoid this undesirable condition.

U.S. Patent No. 1,745,992 issued to Herold discloses a caster that compresses an elastomeric damper in a nutcracker fashion. The Herold device exhibits a very limited compression stroke and suffers unavoidable deterioration of the elastic damper due to repeated impact.

The prior art U.S. Patent No. 2,738,542 issued to Clark discloses a rather commonly adopted suspension mechanism for a caster and includes a saddle-shaped mounting bracket, a U-shaped wheel fork, a hinge pin and two helical coil springs. However, the Clark device is unduly complex in that it incorporates many separate components in addition to the biasing means to support the mechanism, adding additional cost and weight to the caster assembly.

U.S. Patent No. 5,394,589 issued to Braeger et al. discloses a somewhat simpler shock-absorbing caster, but uses multiple structural components not required in the novel apparatus of the present invention.

U.S. Patent No. 2005/0051983A discloses a skateboard truck according to the preamble of claim 1.

### BRIEF SUMMARY OF THE INVENTION

The present invention is defined in claim 1 and relates generally to skateboard and caster devices. More particularly, the present invention concerns both dual wheel and single wheel axle supports of trucks and casters and discloses a unique suspension mechanism for absorbing shock. The novel suspension mechanism of the present invention progressively increases suspension resistance as forces acting on the mechanism increase by elastically deforming an independent arm to contact another arm or structure thereby transforming the independent arm into a dependent arm that results in a progressive resistance to a load until the forces terminally engage a resilient abutment. The present invention also concerns an embodiment for an extendable tilt axis alignment device for a truck hanger that enables full tilt steering functions when a truck hanger is mounted on a novel suspension mechanism.

With the foregoing in mind, it is an object of the present invention to provide a shock-absorbing suspension mechanism for use on skateboards and caster devices that markedly improves stability, riding enjoyment, and user safety by reducing undesirable shock and vibration.

Another object of the invention is to provide a shock-absorbing suspension mechanism of the aforementioned character that maintains control of the device even when used on rough and uneven surfaces.

Another object of the invention is to provide a shock-absorbing suspension mechanism of the character described that includes a suspension arm that is free to articulate and absorb shock and one that uniquely functions to progressively increase suspension resistance as forces acting on the mechanism increase.

Another object of the invention is to provide a shock absorbing mechanism of the character described in the preceding paragraph that includes an independent arm that is adapted to contact another arm or structure thereby transforming the independent arm into a dependent arm that results in a progressive resistance to the load until the forces terminally engage a resilient abutment.

Another object of the invention is to provide a shock-absorbing suspension mechanism of the class described in which a shock absorber is connected to the suspension mechanism to further dampen shock and vibration.

Another object of the invention is to provide a shock-absorbing suspension mechanism for axle support constructions of the type used on skateboards and cart devices in which the kingpin, kingpin mount or caster fastener projects through a first independent arm and is slidably engaged into a secondary independent arm thus providing additional axial stability. Another object of the invention is to provide an extendable tilt axis alignment mechanism for use on a skateboard truck that permits the axle hanger to maintain a tilt axis throughout the suspension compression cycle and one which uses articulation points and extendable portions to counteract any axial forces encountered, thereby providing predictable and stable tilt steering from the truck in virtually all riding conditions.

Another object of the invention is to provide a shock-absorbing suspension mechanism and complementary extendable steering alignment device for use on a skateboard that maintains comparable attributes of axle height, weight and cost to prior art non-biased trucks.

### BRIEF DESCRIPTION OF SEVERAL VIEWS OF THE DRAWINGS

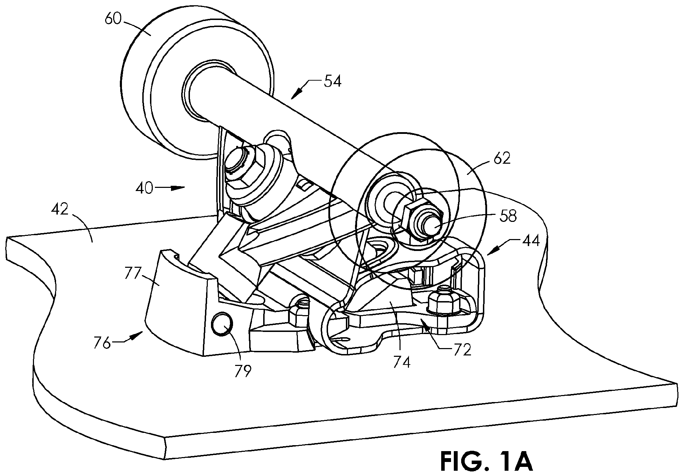

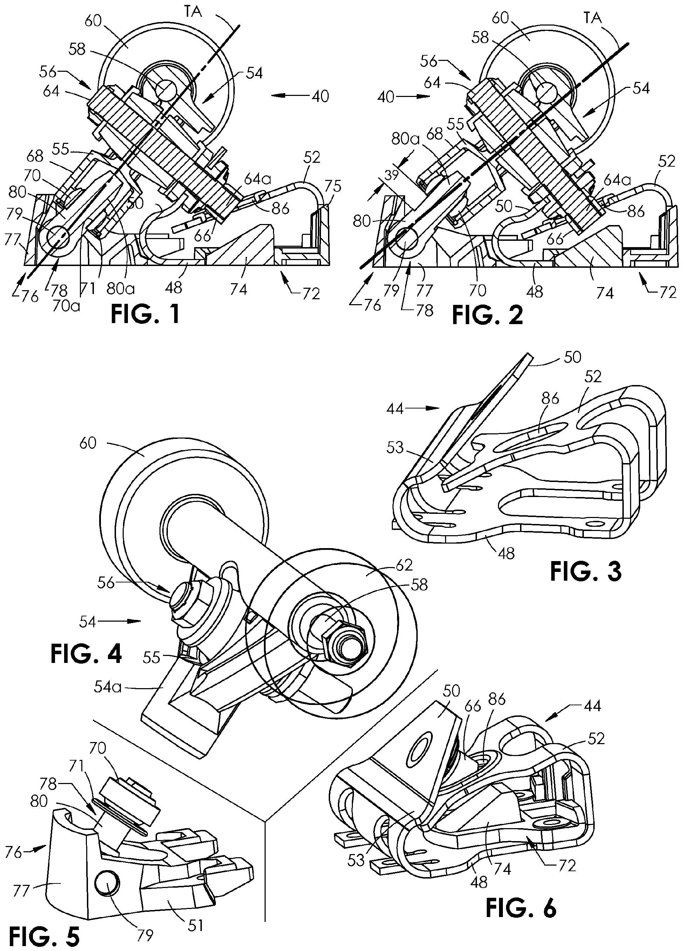

Figure 1A is a generally perspective view of one form of skateboard truck of the invention mounted on a structural member.
Figure 1 is a cross-sectional view of the skateboard truck illustrated in Figure 1A.
Figure 2 is a cross-sectional view similar to Figure 1, but showing the skateboard truck in a compressed state.
Figure 3 is a generally perspective view of one form of the suspension member of the skateboard truck shown in Figures 1 and 1A.
Figure 4 is a generally perspective view of the kingpin truck hanger assembly of the skateboard truck shown in Figure 1.
Figure 5 is a generally perspective view of the extendable tilt axis alignment mechanism of the skateboard truck shown in Figure 1.
Figure 6 is a generally perspective view of the suspension mechanism of the skateboard truck shown in Figure 1.
Figure 7 is a cross-sectional view of an alternate embodiment of the skateboard truck of the invention.
Figure 8 is a cross-sectional view similar to Figure 7, but showing the skateboard truck in a compressed state.
Figure 9 is a generally perspective view of the kingpin truck hanger assembly of the skateboard truck shown in Figure 7.
Figure 10 is a generally perspective view of the extendable tilt axis alignment mechanism of the skateboard truck shown in Figure 7.
Figure 11 is a generally perspective view of the suspension mechanism of the skateboard truck shown in Figure 7.
Figure 12 is a cross-sectional view of still another embodiment of the skateboard truck of the invention.
Figure 13 is a cross-sectional view similar to Figure 12, but showing the skateboard truck in a compressed state.
Figure 14 is a generally perspective view of the kingpin truck hanger assembly of the skateboard truck shown in Figure 12.
Figure 15 is a generally perspective view of the extendable tilt axis alignment mechanism of the skateboard truck shown in Figure 12.
Figure 16 is a generally perspective view of the suspension mechanism of the skateboard truck shown in Figure 12.
Figure 17 is a cross-sectional view of yet another embodiment of the skateboard truck of the invention.
Figure 18 is a cross-sectional view similar to Figure 17, but showing the skateboard truck in a compressed state.
Figure 19 is a generally perspective view of the kingpin truck hanger assembly of the skateboard truck shown in Figure 17.
Figure 20 is a generally perspective view of the extendable tilt axis alignment mechanism of the skateboard truck shown in Figure 17.
Figure 21 is a generally perspective view of the suspension mechanism of the skateboard truck shown in Figure 17.
Figure 22 is a generally perspective view showing variations of rib profiles formed transverse to the longitudinal axis of the independent arm of the suspension mechanism shown in Figure 21.
Figure 23 is a cross-sectional view of an example different from the present invention.
Figure 24 is a generally perspective view of the single wheel caster of the example shown in Figure 23.
Figure 25 is a generally perspective view of a dual wheel caster usable with the suspension mechanism of the example shown in Figure 23.
Figure 26 is a generally perspective view of the suspension mechanism of the example shown in Figure 23.
Figure 27 is a cross-sectional view of yet another example different from the invention.
Figure 28 is a cross-sectional view similar to Figure 27, but showing the mechanism in a compressed state.
Figure 29 is a generally perspective view of the example shown in Figure 27.
Figure 30 is a generally perspective view of yet another example different from the invention.

### DETAILED DESCRIPTION OF THE INVENTION

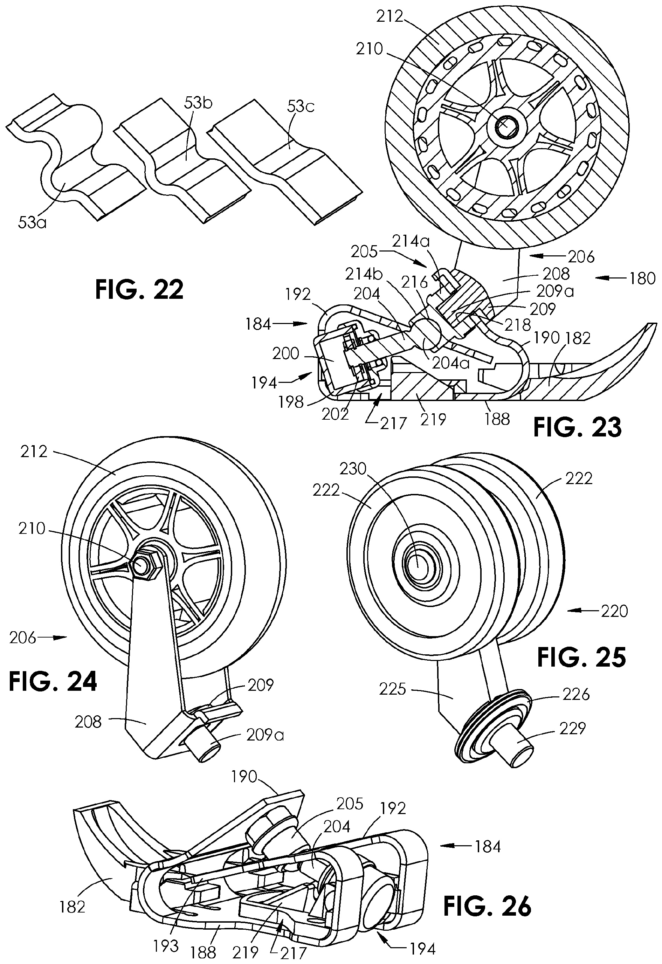

Referring to the drawings and particularly to Figures 1 through 6, one form of the truck of the invention is there shown and generally designated by the numeral 40. As will become clear from the description that follows, the truck of the invention is usable with a skateboard, scooter, or like vehicle of the character having a structural member 42, such as a deck upon which the truck can be mounted. An important feature of the invention is the suspension mechanism 44 that is connected to the structural member in the manner shown in Figure 1A. Suspension mechanism 44 here comprises a base 48, a first flex member 50 connected to base 48 and extending angularly outwardly therefrom and a second flex member 52 connected to the base and extending outwardly therefrom in a direction toward the first flex member (see Figure 3). As best seen in Figure 3, first flex member 50 of said suspension mechanism extends from base 48 at an angle of between about 25° and about 65°. As illustrated in Figures 1 and 2, first flex member 50 is constructed and arranged to flex between a first position shown in Figure 1 and a second position shown in Figure 2 wherein it resides proximate second flex member 52. As best seen in Figures 3 and 6, first flex member 50 is provided with a transversely extending, concave rib 53 that tends to enhance the flexing capability of member 50. It is to be understood that the transversely extending rib can be formed in various configurations. For example, Figure 22 illustrates several alternate variations of rib profiles that can be formed in first flex member 50, which variations are identified in Figure 22 as 53a, 53b and 53c respectively.

Suspension member 46 is preferably constructed from a single piece of material selected from the group consisting of metal, plastic, fiberglass, KEVLAR® and carbon fiber.

Connected to first flex member 50 is a hanger assembly 54, the character of which is shown in Figure 4 of the drawings. Hanger assembly 54 has a tilt axis "TA", a hanger body 54a and a pivot leg 55 affixed to hanger body 54a and disposed substantially parallel to the pivot axis. Hanger assembly 54 also comprises a kingpin assembly 56, an axle 58 connected to the kingpin assembly, and first and second wheels 60 and 62 that are rotatably mounted on axle 58. Kingpin assembly 56 includes a kingpin 64 and an alignment guide 66. Extending outwardly from kingpin 64 is an alignment sleeve 68 that houses a rotatably mounted spherical bearing 70 that has a central bore 70a.

Operably associated with hanger assembly 54 is the important alignment means of the invention which functions to maintain the orientation of the tilt axis of the hanger assembly as the first flex member 50 flexes between its first and second position. The construction and operation of the alignment means will presently be described.

Also connected to base 48 of the suspension member 44 is a bumper assembly 72 that includes a bumper stop 74 which, in a manner presently to be described, is engagable by the kingpin 64 of the kingpin assembly 56.

In the present form of the invention, the important alignment means comprises an alignment assembly 76 that includes a body portion 77 that is connected to the structural member 42 and to the suspension mechanism 44 in the manner illustrated in Figure 1A. Alignment assembly 76 also includes a hinge pin assembly 78 that is rotatably connected to body portion 77 and includes a transversely extending pin portion 79 and a connector member 80 that is connected to pin portion 79 and extends outwardly therefrom. As seen in Figures 1 and 2, the connector member 80 is receivable within the central bore 70a of spherical bearing 70 for reciprocal movement therewithin between the first position shown in Figure 1, through a distance 39 into the second position shown in Figure 2.

When the trucks of the invention are connected to the skateboard deck 42 in the manner illustrated in Figure 1A, the skateboard can be operated in a conventional manner with steering being accomplished by the rider tilting the rider surface from side to side, thus pivoting the hangers on the tilt axis "TA" between 30° and 55° thus causing the skateboard to turn. As illustrated in Figures 1 and 2, as forces are exerted by the rider on the novel suspension mechanism 44 of the invention, the first flex member 50 will flex from the first position shown in Figure 1 toward the second position shown in Figure 2 and toward the second flex member 52.

As the first flex member 50 flexes toward the second position, the kingpin assembly 56, which is connected to the first flex member by appropriate fasteners 84 in the manner shown in Figures 1 and 2, also moves downwardly. More particularly, as shown in Figure 2, the lower end portion 64a of kingpin 64, along with the lower end portion of the alignment guide 66, moves into an aperture 86 formed in the second flex member 52 of the suspension mechanism and in a direction toward the bumper stop 74 of the bumper assembly 72.

It is to be noted that the suspension mechanism is uniquely designed to progressively increase suspension resistance as forces acting on the mechanism increase by elastically deforming the first flex member in a manner to contact the second flex member, thereby transforming the first flex member into a dependent arm that results in a progressive resistance to a load until the forces are terminally engaged into the bumper stop 74.

As the kingpin assembly 56 moves downwardly, the end portion 80a of the connector member 80 of the alignment assembly of the alignment means of the invention, moves reciprocally inwardly of the central bore 70a of spherical bearing 70 that is housed within alignment sleeve 68 of the kingpin assembly 56. Spherical bearing 70 is maintained in position within the alignment sleeve by a retainer clip 71 (Figure 5).

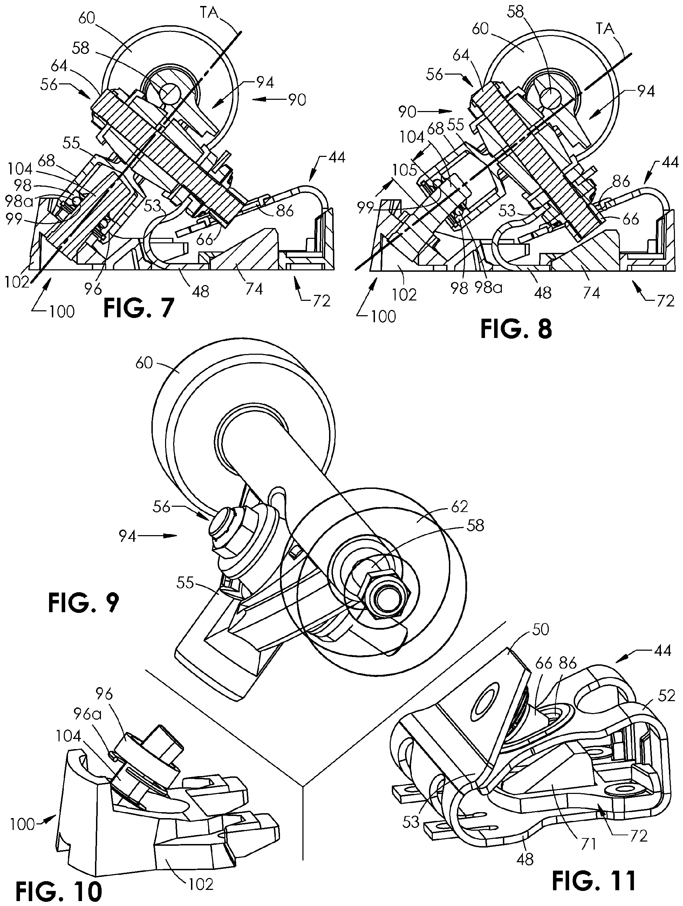

Referring now to Figures 7 through 11 of the drawings, an alternate form of the truck of the invention is there shown and generally designated by the numeral 90. This embodiment of the invention is similar in many respects to the embodiment shown in Figures 1 through 6 of the drawings and like numerals are used in Figures 7 through 11 to identify like components.

The primary difference between this latest embodiment of the invention and the earlier described embodiment resides in a differently configured hanger assembly and a differently configured alignment means.

As in the earlier described embodiment, an important feature of this latest form of the invention resides in the suspension mechanism 44 that is substantially identical in construction and operation to that previously described.

Connected to the first flex member 50 is a hanger assembly 94 of the invention that is of somewhat different construction. However, as in the earlier described embodiment of the invention, hanger assembly 94 has a tilt axis "TA" and comprises a kingpin assembly 56, an axle 58 connected to the kingpin assembly, and first and second wheels 60 and 62 that are rotatably mounted on axle 58. Kingpin assembly 56 also includes a kingpin 64 and an alignment guide 66 that are substantially identical in construction and operation to those previously described. Extending outwardly from kingpin 64 is an alignment sleeve 68 that houses a differently constructed bearing 96. More particularly, bearing 96 here comprises a rolling element bearing that has an outer race 98 and a plurality of circumferentially spaced ball bearings 98a that cooperate to define a central opening 99. Bearing 96 is maintained in position within the alignment sleeve by a retainer clip 96a (Figure 10).

Operably associated with hanger assembly 94 is the important alignment means of this latest form of the invention which functions to maintain the orientation of the tilt axis of the hanger assembly as the first flex member 50 flexes between its first and second position. The construction and operation of this alternate form of the alignment means of the invention will presently be described.

Also connected to base 48 of the suspension member 44 is a bumper assembly 72 that is substantially identical in construction and operation to that previously described and includes a bumper stop 74 which is engagable by the kingpin 64 of the kingpin assembly 56.

In the present form of the invention, the important alignment means comprises an alignment assembly 100 that includes a body portion 102 that is connected to the structural member 42 and to the suspension mechanism 44 in the manner illustrated in Figures 7 and 8. Alignment assembly 100 here uniquely comprises a curved connector member 104 that is receivable within the central bore 99 of bearing 96 for reciprocal movement therewithin between the first position shown in Figure 7, and through a distance 105 into the second position shown in Figure 8. With this novel construction, as the first flex member 50 flexes between its first and second position, connector member 104 functions to positively maintain the orientation of the tilt axis of the hanger assembly.

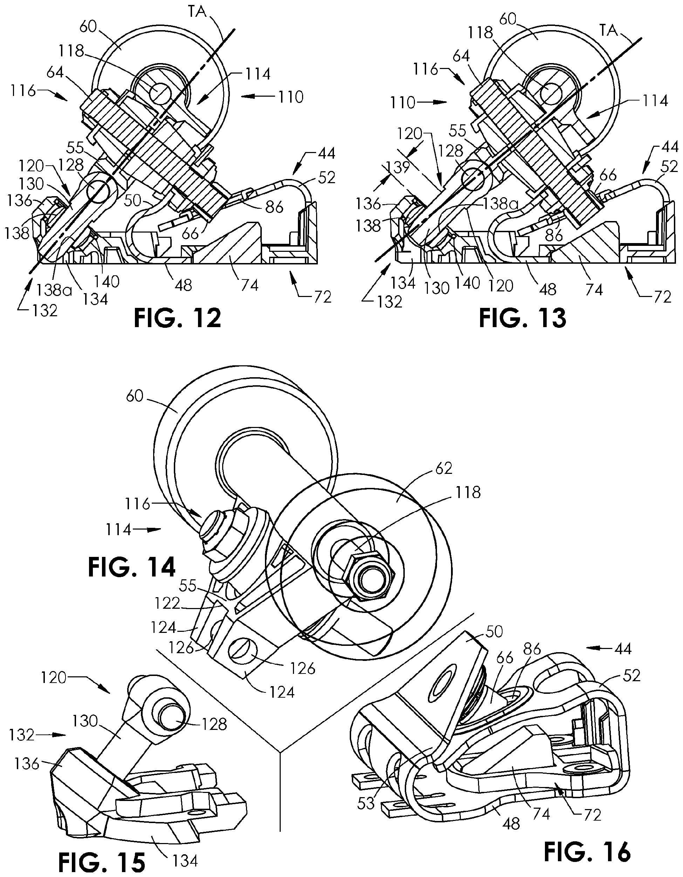

Turning next to Figures 12 through 16 of the drawings, still another form of the truck of the invention is there shown and generally designated by the numeral 110. This embodiment of the invention is also similar in many respects to the embodiment shown in Figures 1 through 6 of the drawings and like numerals are used in Figures 12 through 16 to identify like components.

The primary difference between this latest embodiment of the invention and the earlier described embodiments once again resides in the differently configured hanger assembly and the differently configured alignment means.

As in the earlier described embodiments, an important feature of this latest form of the invention resides in the suspension mechanism 44 that is substantially identical in construction and operation to that previously described.

Connected to the first flex member 50 is a hanger assembly 114 of the invention that is of somewhat different construction. However, as in the earlier described embodiment of the invention, hanger assembly 114 has a tilt axis "TA" and comprises a kingpin assembly 116, an axle 118 connected to the kingpin assembly, and first and second wheels 60 and 62 that are rotatably mounted on axle 118. Kingpin assembly 116 also includes a kingpin 64 and an alignment guide 66 that are substantially identical in construction and operation to those previously described. Extending outwardly from kingpin 64 is a hinge pin assembly 120 that is rotatably carried by the yoke portion 122 of the differently configured kingpin assembly 116. As best seen in Figure 14, yoke portion 122 here comprises a pair of spaced apart legs 124, each of which is provided with a bore 126. Bores 126 rotatably receive the end portions of the transversely extending pin portion 128 of the hinge pin assembly 120. Extending outwardly from pin portion 128 is a connector member 130.

In this latest form of the invention, the differently configured alignment means comprises an alignment assembly 132 that includes a body portion 134 that is connected to the structural member 42 and to the suspension mechanism 44 in the manner illustrated in Figures 12 and 13. As before, alignment assembly 132 functions to maintain the orientation of the tilt axis of the hanger assembly as the first flex member 50 flexes between its first and second position. Alignment assembly 132 also includes a housing 136 that houses a spherical bearing 138 that has a central bore 138a. Bearing 138 is maintained in position within housing 136 by a retainer clip 140 (Figure 12). As depicted in Figures 12, 13 and 15, the connector member 130 of the hinge pin assembly 120 is receivable within the central bore 138a of spherical bearing 138 for reciprocal movement therewithin between the first position shown in Figure 12 and through the distance 139 into the second position shown in Figure 13. With this novel construction, as the first flex member 50 flexes between its first and second position, connector member 130 functions to positively maintain the orientation of the tilt axis of the hanger assembly.

Also connected to base 48 of the suspension member 44 is a bumper assembly 72 that is substantially identical in construction and operation to that previously described and includes a bumper stop 74 which is engagable by the kingpin 64 of the kingpin assembly 116.

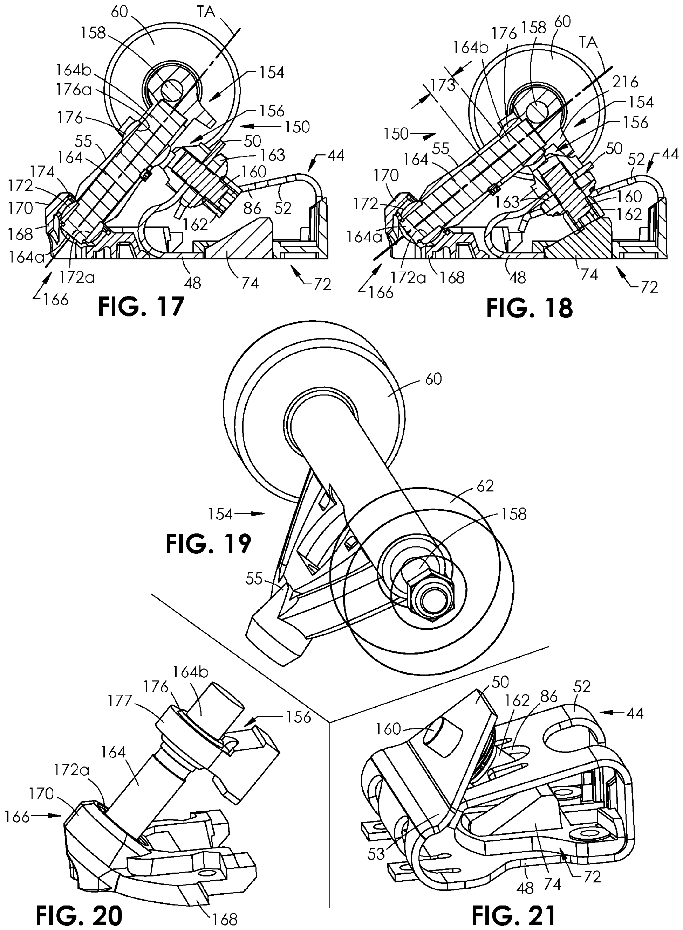

Turning next to Figures 17 through 21 of the drawings, yet another form of the truck of the invention is there shown and generally designated by the numeral 150. This embodiment of the invention is similar in some respects to the embodiment shown in Figures 12 through 16 of the drawings and like numerals are used in Figures 17 through 21 to identify like components.

As in the earlier described embodiments, an important feature of this latest form of the invention resides in the suspension mechanism 44 that is substantially identical in construction and operation to that previously described.

Connected to the first flex member 50 is a hanger assembly 154 of the invention that is of somewhat different construction. However, as in the earlier described embodiment of the invention, hanger assembly 154 has a tilt axis "TA" and comprises a kingpin assembly 156, an axle 158 connected to the kingpin assembly, and first and second wheels 60 and 62 that are rotatably mounted on axle 158. Kingpin assembly 156 here includes a threaded stub connector 160 and an alignment guide 162 that, along with suitable locking nuts 163, function to interconnect the kingpin assembly with the first flex member 50 in the manner illustrated in Figures 17 and 18. Also forming a part of the kingpin assembly is an elongated connector 164 that extending outwardly from axle 158.

In this latest form of the invention, the differently configured alignment means comprises an alignment assembly 166 that includes a body portion 168 that is connected to the structural member 42 and to the suspension mechanism 44 in the manner illustrated in Figures 17 and 18. As before, alignment assembly 166 functions to maintain the orientation of the tilt axis of the hanger assembly as the first flex member 50 flexes between its first and second position. Alignment assembly 166 also includes a housing 170 that houses a spherical bearing 172 that has a central bore 172a. Bearing 172 is maintained in position within housing 170 by a retainer clip 174 (Figure 17). As depicted in Figures 17, 18 and 20, the end portion 164a of elongated connector 164 is receivable within the central bore 172a of spherical bearing 172. The end portion 164b of elongated connector 164 is also receivable within the central bore 176a of a second spherical bearing 176 that is mounted within a housing 177 that forms a part of kingpin assembly 156 (Figure 20). End portion 164b is movable within second spherical bearing 176 between the first position shown in Figure 17 and through the distance 173 into the second position shown in Figure 18. With this novel construction, as the first flex member 50 flexes between its first and second position, connector member 164 functions to positively maintain the orientation of the tilt axis of the hanger assembly.

Also connected to base 48 of the suspension member 44 is a bumper assembly 72 that is substantially identical in construction and operation to that previously described and includes a bumper stop 74 which is engagable by the end of the threaded stub connector 160 (see Figure 18).

Referring next to Figures 23 through 26 of the drawings, an example different from the invention is there shown. This embodiment concerns a novel caster assembly 180 for use on carts, caster boards, wheelchairs and the like having a structural member 182 (Figure 23). Caster assembly 180 here comprises a suspension mechanism 184 that is connected to the structural fender member 182. This novel suspension mechanism here comprises a suspension member having a base 188, a first flex member 190 connected to base 188 and extending angularly outwardly therefrom, and a second flex member 192 connected to base 188. Second flex member 192 comprises a pair of transversely spaced arms 193 that extend toward first flex member 190 in the manner depicted in Figure 26.

Connected to suspension mechanism 184 and disposed between the transversely spaced arms 193 of second flex member 192 is a shock absorber assembly 194. Shock absorber assembly 194 here comprises a hollow housing 198 having an inner chamber 200 and a shock absorber plate 202 that reciprocates within chamber 200. Connected to shock absorber plate 202 is an elongate connector rod 204 that has a generally spherically shaped end portion 204a.

Connected to shock absorber assembly 194 by means of a connector assembly 205 is a caster wheel assembly 206 that here comprises a yoke-like wheel support 208, a connector pin 209 that is carried by the yoke-like wheel support, an axle 210 connected to the wheel support and a wheel 212 that is rotatably mounted on axle 210. Connector assembly 205, which is connected to first flex member 190 by suitable connectors in the manner shown in Figure 23, includes a connector housing 214 having an upper portion 214a and a lower portion 214b. Lower portion 214b is provided with a socket 216 that rotatably receives the generally spherically shaped end portion 204a of connector rod 204. Upper portion 214a is provided with a central bore 218 that receives the cylindrical shank portion 209a of connector pin 209 so as to enable the caster wheel assembly 206 to be interconnected with the suspension mechanism 184 in the manner shown in Figure 23. End portion 204a and connector housing lower portion 214b terminate into bumper assembly 219 to stop movement.

Referring to Figure 25, an alternate form of caster wheel assembly is there shown and generally designated by the numeral 220. This alternate form of caster wheel assembly can be connected to the suspension mechanism 184 in the manner previously described using connector assembly 205. Caster wheel assembly 220 here comprises a wheel support 225, a swivel 226, a connector pin 229 that is carried by the wheel support, an axle 230 connected to the wheel support and a pair of wheels 222 that are rotatably mounted on axle 230.

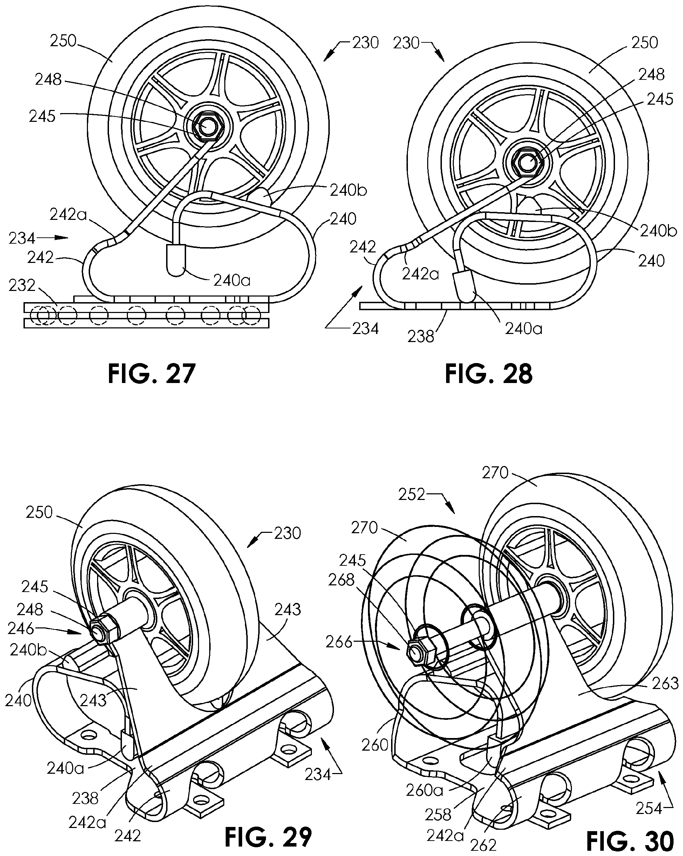

Referring to Figures 27 through 29 of the drawings, still another example is there shown. This embodiment concerns a novel caster assembly 230 for use on carts, caster boards, wheelchairs and the like having a structural member such as swivel 232 (Figure 23). Caster assembly 230 here comprises a suspension mechanism 234 that is connected to the structural member 232. This novel suspension mechanism here comprises a base 238, a first flex member 240 connected to base 238 and extending angularly outwardly therefrom, and a second flex member 242 connected to base 238. Second flex member 242 comprises a pair of transversely spaced arms 243 that extend toward first flex member 190 in the manner depicted in Figure 27. Second flex member 242 is provided with a transversely extending, concave rib 242a that functions in the manner previously described to enhance the flexing of second flex member 242.

Connected to second flex member 242 by appropriate fasteners 245 in the manner illustrated in the drawings, is a caster wheel assembly 246 that here comprises an axle 248 and a wheel 250 that is rotatably mounted on axle 248.

It is to be noted that the suspension mechanism is uniquely designed to progressively increase suspension resistance as forces acting on the mechanism increase by elastically deforming the second flex member 242 in a manner to contact the first flex member 240, thereby transforming the first flex member into a dependent arm that results in a progressive resistance to a load until the forces are terminally engaged by the end portion 240a of the first flex member 240, engaging the base 238 (see Figure 28) and second arm 242, terminally engaging stop 240b disposed on first flex member 240.

Referring finally to Figure 30 of the drawings, yet another example is there shown. This embodiment is somewhat similar to that shown in Figures 27 through 29 and also concerns a novel caster assembly 252 for use on carts, caster boards, wheelchairs and the like having a structural member such as, for example a swivel 232 of the character shown in Figure 23. Caster assembly 252 here comprises a suspension mechanism 254 that is connected to the structural member. This novel suspension mechanism here comprises a base 258, a first flex member 260 connected to base 258 and extending angularly outwardly therefrom, and a second flex member 262 connected to base 258. Second flex member 262 comprises an outwardly extending arm 263 that extends toward first flex member 260 in the manner depicted in Figure 30. Second flex member 262 is provided with a transversely extending, concave rib 262a that functions in the manner previously described to enhance the flexing of second flex member 262.

Connected to second flex member 262 by appropriate fasteners "F" in the manner illustrated in the drawings, is a caster wheel assembly 266 that here comprises an axle 268 and a pair of transversely spaced apart wheels 270 that is rotatably mounted on axle 268.

It is to be noted that, as before, the suspension mechanism is uniquely designed to progressively increase suspension resistance as forces acting on the mechanism increase by elastically deforming the second flex member 262 in a manner to contact the first flex member 260, thereby transforming the first flex member into a dependent arm that results in a progressive resistance to a load until the forces are terminally engaged by the end portion 260a of the first flex member 260.

Having now described the invention in detail in accordance with the requirements of the patent statutes, those skilled in this art will have no difficulty in making changes and modifications in the individual parts or their relative assembly in order to meet specific requirements or conditions. Such changes and modifications may be made without departing from the scope of the invention, as set forth in the following claims.

## Claims

1. A truck for a skateboard, scooter and the like, having a structural member (42), said truck comprising:
a. a suspension mechanism (44) connected to the structural member (42), said suspension mechanism (44) comprising a suspension member (44) having a base (48) and a first flex member (50) connected to said base (48) and extending angularly outwardly therefrom, said first flex member (50) being constructed and arranged to flex between a first and second position and a second flex member (52) connected to said base (48) and extending outwardly therefrom in a direction toward said first flex member (50);
b. a hanger assembly (54, 94, 114, 154) connected to the structural member (42), said hanger assembly (54, 94, 114, 154) having an axle (58, 118, 158), at least one wheel (60, 62) rotatably mounted on said axle (58); a hanger body (54a) including an alignment leg (55) extending from said axle (58, 118, 158); a bearing (70, 96, 138, 172) mounted in alignment with said alignment leg (55); a kingpin assembly (56, 116, 156) connected to said first flex member (50), said kingpin assembly (56, 116, 156) including a kingpin (64, 164); and
c. an alignment assembly (76, 100, 132, 166) connected to the structural member (42), said alignment assembly (76, 100, 132, 166) including a body portion (77, 102, 134, 168), **characterised in that** said bearing (70, 96, 138, 172) has a central bore (70a, 99, 138a, 172a) and **in that** said alignment assembly (76, 100, 132, 166) further comprises a connector member (80, 104, 130, 164) connected to said body portion (77, 102, 134, 168) and extending therefrom, said connector member being receivable within said bearing of said hanger assembly for reciprocal movement therewithin.

2. The truck defined in Claim 1, **characterized by** a bumper assembly (72) connected to said base (48) of said suspension member (44) and including a bumper stop (74) engageable by said kingpin assembly (56, 116, 156).

3. The truck as defined in Claim 1, **characterized in that** said first flex member (50) of said suspension member (44) of said suspension mechanism (44) extends from said base (48) at an angle of between about 25° and about 65°.

4. The truck as defined in Claim 1, **characterized in that** said first flex member (50) of said suspension member (44) of said suspension mechanism (44) is yieldably deformable from a first position to a second position wherein said first flex member (50) is in engagement with said second flex member (52).

5. The truck as defined in Claim 1, **characterized in that** said alignment assembly (76, 132) further includes a hinge pin assembly (78, 120) rotatably carried by body portion (77, 134) of said alignment assembly (76, 132), said hinge pin assembly (78, 120) including a transversely extending pin portion (79, 128), said connector member (80, 130) being connected to said transversely extending pin portion (79, 128).

6. The truck as defined in Claim 1, **characterized in that** said first flex member (50) of said suspension member (44) of said suspension mechanism (44) is provided with a transversely extending concave rib portion (53).

7. The truck as defined in Claim 1, **characterized in that** said second flex member (52) of said suspension member (44) of said suspension mechanism (44) is provided with an aperture (86) and in which an alignment guide (66, 162) of said kingpin assembly (56, 116, 156) is receivable within said aperture (86).

8. The truck as defined in Claim 1, **characterized in that** said suspension member (44) of said suspension mechanism (44) is constructed from a single piece of material selected from the group consisting of metal, plastic, fiberglass, KEVLAR® and carbon fiber.

9. The truck as defined in Claim 1, **characterized in that** said first flex member (50) of said suspension mechanism (44) flexes to a position in close proximity with said second first flex member (52).

10. The truck as defined in Claim 1, **characterized in that** said alignment assembly (76, 100) comprises a sleeve (68) carrying the bearing (70, 96) and a connector member (80, 104) receivable within said bearing (70, 96).

## Patentansprüche

1. Fahrgestell für ein Skateboard, einen Roller oder Ähnliches, mit einem Bauteil (42), wobei das Fahrgestell versehen ist mit:
a. einem Aufhängungs-Mechanismus (44), welcher mit dem Bauteil (42) verbunden ist, wobei der Aufhängungs-Mechanismus (44) ein Aufhängungselement (44) aufweist, welches eine Basis (48) und ein erstes flexibles Element (50) aufweist, welches mit der Basis (48) verbunden ist und sich ausgehend von dieser in einem Winkel nach außen erstreckt, wobei das erste flexible Element (50) derart gestaltet und angeordnet ist, dass dieses sich zwischen einer ersten und einer zweiten Position biegen kann, und das Aufhängungselement ein zweites flexibles Element (52) aufweist, welches mit der Basis verbunden ist und sich ausgehend von dieser nach außen in Richtung des ersten flexiblen Elements (50) erstreckt;
b. einer Hänger-Anordnung (54, 94, 114, 154), welche mit dem Bauteil (42) verbunden ist, wobei die Hänger-Anordnung (54, 94, 114, 154) eine Achse (58, 118, 158) aufweist, und mindestens ein Rad (60, 62) aufweist, welches drehbar an der Achse (58) montiert ist; einem Hängerkörper (54a), welcher einen Ausrichtungsarm (55) aufweist, welcher sich ausgehend von der Achse (58, 118, 158) erstreckt; einem Lager (70, 96, 138, 172), welches mit dem Ausrichtungsarm (55) ausgerichtet montiert ist; einer Stehbolzen-Anordnung (56, 116, 156), welche mit dem ersten flexiblen Element (50) verbunden ist, wobei die Stehbolzen-Anordnung (56, 116, 156) einen Stehbolzen (64, 164) aufweist; und
c. einer Ausrichtungs-Anordnung (76, 100, 132, 166), welche mit dem Bauteil (42) verbunden ist, wobei die Ausrichtungs-Anordnung (76, 100, 132, 166) einen Chassis-Teil (77, 102, 134, 168) aufweist,
**dadurch gekennzeichnet, dass**
das Lager (70, 96, 138,172) ein zentrales Loch (70a, 99, 138a, 172a) aufweist, und dass die Ausrichtungs-Anordnung (76, 100, 132, 166) weiter einen Verbindungsteil (80, 104, 130, 164) aufweist, welches mit dem Chassisteil (77, 102, 134, 168) verbunden ist und sich ausgehend von diesem erstreckt, wobei der Verbindungsteil in dem Lager der Hänger-Anordnung für eine Hin- und Herbewegung darin aufgenommen ist.

2. Das Fahrgestell nach Anspruch 1, **gekennzeichnet durch** eine Anschlag-Anordnung (72), welche mit der Basis (48) des Aufhängungselements (44) verbunden ist und einen Anschlag (74) aufweist, gegen welchen die Stehbolzen-Anordnung (56, 116, 156) anschlagen kann.

3. Das Fahrgestell nach Anspruch 1, **dadurch gekennzeichnet, dass** das erste flexible Element (50) des Aufhängungselements (44) des Aufhängung-Mechanismus (44) sich ausgehend von der Basis (48) in einem Winkel von etwa 25° bis etwa 65° erstreckt.

4. Das Fahrgestell nach Anspruch 1, **dadurch gekennzeichnet, dass** das erste flexible Element (50) des Aufhängungselements (44) des Aufhängungs-Mechanismus (44) elastisch ausgehend von einer ersten Position in eine zweite Position deformierbar ist, in welcher sich das erste flexible Element (50) im Eingriff mit dem zweiten flexiblen Element (52) befindet.

5. Das Fahrgestell nach Anspruch 1, **dadurch gekennzeichnet, dass** die Ausrichtungs-Anordnung (76, 132) weiter eine Gelenkbolzen-Anordnung (78, 120) aufweist, welche drehbar von dem Chassisteil (77, 134) der Ausrichtungs-Anordnung (76,132) getragen wird, wobei die Gelenkbolzen-Anordnung (78, 120) einen sich quer erstreckenden Gelenkbolzenteil (79, 128) aufweist, wobei der Verbindungsteil (80, 130) mit dem sich quer erstreckenden Gelenksbolzenteil (79, 128) verbunden ist.

6. Das Fahrgestell nach Anspruch 1, **dadurch gekennzeichnet, dass** das erste flexible Element (50) des Aufhängungselements (44) des Aufhängungs-Mechanismus (44) mit einem sich quer erstreckenden konkaven Rippenteil (53) versehen ist.

7. Das Fahrgestell nach Anspruch 1, **dadurch gekennzeichnet, dass** das zweite flexible Element (52) des Aufhängungselements (44) des Aufhängungs-Mechanismus (44) mit einer Ausnehmung (86) versehen ist, wobei eine Ausrichtungsführung (66,162) der Stehbolzen-Anordnung (56,100 16,156) in dieser Ausnehmung (86) aufnehmbar ist.

8. Das Fahrgestell nach Anspruch 1, **dadurch gekennzeichnet, dass** das zweite flexible Element (52) des Aufhängungselements (44) des Aufhängungs-Mechanismus (44) einstückig aus einem Material gefertigt ist, welches aus der Gruppe bestehend aus Metall, Kunststoff, Fiberglas, KEVLAR® und Kohlefaser gewählt ist.

9. Das Fahrgestell nach Anspruch 1, **dadurch gekennzeichnet, dass** das erste flexible Element (50) des Aufhängung-Mechanismus (44) sich zu einer nahe dem zweiten flexiblen Element (52) befindlichen Position biegt.

10. Das Fahrgestell nach Anspruch 1, **dadurch gekennzeichnet, dass** die Ausrichtungs-Anordnung (76, 100) eine Hülse (68) aufweist, welche das Lager (70, 96) und ein Verbindungselement (80, 104) trägt, welches in dem Lager (70, 96) aufnehmbar ist.

## Revendications

1. Bloc-essieu pour une planche à roulettes, une trottinette et similaire, comportant un organe structurel (42), ledit bloc-essieu comprenant :
a. un mécanisme de suspension (44) raccordé à l'organe structurel (42), ledit mécanisme de suspension (44) comprenant un organe de suspension (44) comportant une base (48) et un premier organe flexible (50) raccordé à ladite base (48) et s'étendant de manière oblique vers l'extérieur à partir de celle-ci, ledit premier organe flexible (50) étant construit et conçu pour fléchir entre des première et seconde positions et un second organe flexible (52) raccordé à ladite base (48) et s'étendant vers l'extérieur à partir de celle-ci dans une direction allant vers ledit premier organe flexible (50) ;
b. un ensemble formant étrier (54, 94, 114, 154) raccordé à l'organe structurel (42), ledit ensemble formant étrier (54, 94, 114, 154) comportant un essieu (58, 118, 158), au moins une roue (60, 62) installée à rotation sur ledit essieu (58) ; un corps d'étrier (54a) comprenant un pied d'alignement (55) s'étendant à partir dudit essieu (58, 118, 158) ; un palier (70, 96, 138, 172) installé dans l'alignement dudit pied d'alignement (55) ; un ensemble formant axe d'accouplement (56, 116, 156) raccordé audit premier organe flexible (50), ledit ensemble formant axe d'accouplement (56, 116, 156) comprenant un axe d'accouplement (64, 164) ; et
c. un ensemble d'alignement (76, 100, 132, 166) raccordé à l'organe structurel (42), ledit ensemble d'alignement (76, 100, 132, 166) comprenant une partie corps (77, 102, 134, 168), **caractérisé en ce que** ledit palier (70, 96, 138, 172) comporte un orifice central (70a, 99, 138a, 172a) et **en ce que** ledit ensemble d'alignement (76, 100, 132, 166) comprend en outre un organe de raccordement (80, 104, 130, 164) raccordé à ladite partie corps (77, 102, 134, 168) et s'étendant à partir de celle-ci, ledit organe de raccordement étant apte à être reçu à l'intérieur dudit palier dudit ensemble formant étrier à des fins de mouvement alternatif à l'intérieur de celui-ci.

2. Bloc-essieu selon la revendication 1, **caractérisé par** un ensemble formant butoir (72) raccordé à ladite base (48) dudit organe de suspension (44) et comprenant un organe d'arrêt de butoir (74) avec lequel ledit ensemble formant axe d'accouplement (56, 116, 156) peut interagir.

3. Bloc-essieu selon la revendication 1, **caractérisé en ce que** ledit premier organe flexible (50) dudit organe de suspension (44) dudit mécanisme de suspension (44) s'étend à partir de ladite base (48) à un angle compris entre environ 25° et environ 65 °.

4. Bloc-essieu selon la revendication 1, **caractérisé en ce que** ledit premier organe flexible (50) dudit organe de suspension (44) dudit mécanisme de suspension (44) est déformable sous charge d'une première position à une seconde position dans laquelle ledit premier organe flexible (50) est en interaction avec ledit second organe flexible (52) .

5. Bloc-essieu selon la revendication 1, **caractérisé en ce que** ledit ensemble d'alignement (76, 132) comprend en outre un ensemble formant axe de pivotement (78, 120) supporté à rotation par la partie corps (77, 134) dudit ensemble d'alignement (76, 132), ledit ensemble formant axe de pivotement (78, 120) comprenant une partie axe (79, 128) s'étendant transversalement, ledit organe de raccordement (80, 130) étant raccordé à ladite partie axe (79, 128) s'étendant transversalement.

6. Bloc-essieu selon la revendication 1, **caractérisé en ce que** ledit premier organe flexible (50) dudit organe de suspension (44) dudit mécanisme de suspension (44) est pourvu d'une partie formant nervure concave (53) s'étendant transversalement.

7. Bloc-essieu selon la revendication 1, **caractérisé en ce que** ledit second organe flexible (52) dudit organe de suspension (44) dudit mécanisme de suspension (44) est pourvu d'une ouverture (86) et dans lequel un guide d'alignement (66, 162) dudit ensemble formant axe d'accouplement (56, 116, 156) est apte à être reçu à l'intérieur de ladite ouverture (86).

8. Bloc-essieu selon la revendication 1, **caractérisé en ce que** ledit organe de suspension (44) dudit mécanisme de suspension (44) est construit à partir d'une seule pièce de matériau sélectionné dans le groupe constitué du métal, du plastique, de la fibre de verre, du KEVLAR® et de la fibre de carbone.

9. Bloc-essieu selon la revendication 1, **caractérisé en ce que** ledit premier organe flexible (50) dudit mécanisme de suspension (44) fléchit jusqu'à une position à proximité étroite dudit second premier organe flexible (52).

10. Bloc-essieu selon la revendication 1, **caractérisé en ce que** ledit ensemble d'alignement (76, 100) comprend un manchon (68) supportant le palier (70, 96) et un organe de raccordement (80, 104) apte à être reçu à l'intérieur dudit palier (70, 96).
